# EUROPÄISCHE PATENTSCHRIFT

(11) **EP 3 269 485 B1**
(45) Veröffentlichungstag und Bekanntmachung des Hinweises auf die Patenterteilung: **20.08.2025**
(21) Anmeldenummer: 17001057.3
(22) Anmeldetag: 22.06.2017
(51) Int. Cl.: B23K 1/00

(54) **FLUSSMITTELARMES CAB-LÖTEN BEI WÄRMEÜBERTRAGERN**
LOW FLOW AGENT CAB SOLDERING IN HEAT EXCHANGERS
BRASURE CAB PAUVRE EN FONDANT POUR DES ÉCHANGEURS DE CHALEUR

(30) Priorität: 14.07.2016 DE 102016008490
(43) Veröffentlichungstag der Anmeldung: 17.01.2018
(73) Patentinhaber: Modine Manufacturing Company, Racine, Wisconsin 53403-2552 (US)
(72) Erfinder: Feldhege, Thomas, 70771 Leinfelden-Echterdingen (DE); Holmgren, Markus, 71144 Steinenbronn (DE); Frischknecht, Günther, 72631 Aichtal (DE)
(74) Vertreter: Ter Meer Steinmeister & Partner

(56) Entgegenhaltungen:
- EP-A1- 3 445 520
- WO-A1-2007/131727
- WO-A1-2015/132482
- US-A- 5 476 725
- US-A1- 2011 100 615
- US-A1- 2014 182 821

## Beschreibung

Die vorliegende Erfindung betrifft ein Halbzeug für Halbfabrikat-Bauteile zur Herstellung eines Wärmeübertragers, eine zur nachfolgenden CAB-Verlötung vorbereitete Wärmeübertrager-Baugruppe aus Halbfabrikat-Bauteilen, ein Lötverfahren zur Herstellung von Wärmeübertragern aus Halbfabrikat-Bauteilen und einen Wärmeübertrager, hergestellt mit einem CAB-Lötverfahren.

Derzeit wird vermehrt nach Möglichkeiten gesucht, Wärmeübertrager aus Aluminium ohne Benetzungsmittel bzw. Flussmittel, wie bspw. Kaliumaluminiumtetrafluorid, Nocolok oder dergleichen, prozesssicher zu verlöten, da in der bestimmungsgemäßen, nachträglichen Verwendung das Benetzungsmittel zu Problemen führen kann.

Eine mögliche Variante des Verlötens ohne Flussmittel ist bspw. das VAC-Lötverfahren, bei dem das Verlöten des Wärmeübertragers im Vakuum stattfindet. Bei diesem Verfahren wird üblicherweise dem Kernmaterial und ggf. auch den auf dem Kernmaterial aufgebrachten Beschichtungen Magnesium zugesetzt, um zum einen das Aufbrechen der Oxidschicht auf der Oberfläche zu erleichtern und zum anderen aufgrund des Gettering-Effektes noch verbleibenden freien Restsauerstoff aus der unmittelbaren Umgebung der Materialoberfläche zu entfernen. Dabei reagiert das aus dem Material entweichende Magnesium mit den in der Nähe der Oberfläche befindlichen Sauerstoffmolekülen, sodass eine partielle Verarmung an Sauerstoff im Restvakuum zumindest im Bereich der Materialoberflächen eintritt. Dadurch wird eine Reoxidation bzw. verstärkte Oxidation der Oberfläche des Materials verringert bzw. verhindert und die Oberfläche weist ein ausreichend gutes Lötverhalten der auf den Oberflächen befindlichen Lotschicht auf. Nachteilig an dem VAC-Lötverfahren ist jedoch die übliche Ausbildung als Batch-Verfahren, sodass eine kontinuierliche Produktion der Wärmeübertrager nur mit einem hohen konstruktiven Aufwand ermöglicht werden kann.

Im Gegensatz zum VAC-Lötverfahren kann das CAB-Lötverfahren - ein weiteres Herstellungsverfahren für Wärmeübertrager aus Aluminium - kontinuierlich ausgebildet sein, weil anstatt mit einem Vakuum mit einer Schutzgasatmosphäre gearbeitet werden kann. Dabei kann als Schutzgas bspw. sauerstoffarmes Stickstoffgas verwendet werden, mit dem die ggf. kontinuierlich ausgebildete Lötvorrichtung geflutet wird. Bei dem CAB-Lötverfahren ist es jedoch üblich, zur Verbesserung der Benetzungsfähigkeit der Oberflächen Flussmittel, wie bspw. Kaliumaluminiumfluoride, einzusetzen. Diese Flussmittel können jedoch im späteren bestimmungsgemäßen Einsatz der Wärmeübertrager zu einer Degradation des jeweiligen die Fluidkanäle durchströmendem Fluid neigen in der Art, dass sich Ausscheidungen bilden, sodass die damit einhergehenden Nachteile sich negativ auf die Leistung des Wärmeübertragers auswirken können. Diese Gelbildung kann im extremsten Fall sogar zu einer teilweisen Verstopfung der Fluidkanäle führen. Demzufolge wird vermehrt nach Möglichkeiten gesucht, derartige Flussmittel zu ersetzen oder gänzlich auf dieselben zu verzichten.

Aus der EP 1637 267 A1 ist ein Verfahren zum Verlöten von Aluminiumbauteilen bekannt, das als CAB-Lötverfahren ausgebildet ist und das auf den Einsatz von Fließmittel verzichtet. Dies wird unter anderem dadurch erreicht, dass dem Kernmaterial des eingesetzten Halbzeugs Magnesium hinzugesetzt wird. Durch das vorhandene Magnesium im Kernmaterial, dass während des Lötprozesses in die Lotschicht diffundiert, kann die Oxidschicht an der Materialoberfläche während des Lötprozesses aufgebrochen werden und dadurch die Benetzungsfähigkeit der Lotschicht während des Lötvorganges verbessert werden. Zudem ist üblicherweise das Kernmaterial mit einer Lotschicht versehen, die einen geringeren Magnesiumgehalt aufweist. Dadurch kann verhindert werden, dass sich vorab auf der Materialoberfläche eine Oxidschicht ausbildet, die einen hohen Magnesiumoxidanteil aufweist und aufgrund dessen durch Magnesium weniger gut aufgebrochen werden kann. Während des Lötvorganges diffundiert somit das im Kernmaterial vorhandene Magnesium durch die Lotschicht hindurch und stellt eine ausreichend gute Benetzungsfähigkeit der Lotschicht auf den Oberflächen ein. Aufgrund dementsprechender Ausgestaltung der Lötapparatur gelingt es zudem, eine Schutzgasatmosphäre aufzubauen, die weniger als 20 ppm Sauerstoff aufweist. Durch einen derartig geringen Sauerstoffgehalt in der Schutzgasatmosphäre gelingt ohne den Einsatz von Flussmitteln ebenfalls eine ausreichend gute Verlötung der Bauteile unter anderem aufgrund einer geringen Reoxidationsrate aufgrund des deutliche verringerten Sauerstoffgehalts. Da bei diesem Verfahren zumindest zwei Lötkammern eingesetzt werden, ist dieses Verfahren jedoch konstruktiv aufwendig und kostenintensiv.

Aus der EP 3 445 530 A1 ist ein Aluminiumverbundwerkstoff bekannt, der eine Kernschicht aus einer AL3000-Legierung und eine Korrosionsschutzschicht aus einer AL7000-Legierung aufweist. Des Weiteren ist der Aluminiumverbundwerkstoff beidseitig mit einer Lotschicht aus einer AL4000-Legierung ausgestattet.

In einem Aspekt der Erfindung wird ein Halbzeug für Halbfabrikat-Bauteile zur Herstellung eines Wärmeübertragers, insbesondere nach einem CAB-Lötverfahren, aus einem Kernmaterial und zumindest einseitig mit einer Lotschicht und einer zwischen Lotschicht und Kernmaterial angeordneten korrosionsreduzierende Zwischenschicht vorgeschlagen, wobei das Kernmaterial aus einer AI3000-Legierung oder einer AI6000-Legierung besteht, die 0,1% bis 1,5% Magnesium aufweist, wobei die Lotschicht aus einer AI4000-Legierung besteht, die maximal 0,2% Magnesium aufweist, wobei die korrosionsreduzierende Zwischenschicht aus einer Al1000-Legierung oder einer AI7000-Legierung besteht, die 0,2% bis 0,4% Magnesium aufweist.

Vorteilhaft können aus einem derartigen Halbzeug Halbfabrikat-Bauteile hergestellt werden, die mittels eines CAB-Lötverfahrens, ggf. kontinuierlich ausgebildet, zu einem Wärmeübertrager verlötet werden können. Dies gelingt dadurch, dass die korrosionsreduzierende Zwischenschicht einen gleichen oder zumindest ähnlichen Magnesiumgehalt aufweist, wie das Kernmaterial, sodass das Magnesium durch die Aktivierung aufgrund der thermischen Energie während des Aufheizprozesses zu der Lotschicht bzw. der Oberfläche der Lotschicht diffundieren kann, ohne dass es aufgrund eines zu geringen Magnesiumgehalts der korrosionsreduzierenden Zwischenschicht durch dieselbe abgefangen wird. Demzufolge können durch den Einsatz eines derartigen Halbzeugs vorteilhaft die Korrosionseigenschaften im fertigen Wärmeübertrager verbessert werden und ein CAB-Lötverfahren ohne Einsatz von Flussmittel angewendet werden.

Dabei versteht man unter Halbzeug ein Metallblech bzw. ein Aluminiummetallblech, ggf. aufgewickelt auf einer Rolle, aus dem Halbfabrikat-Bauteile hergestellt werden können. Dabei kann das Halbzeug aus einem Kernmaterial bestehen und zumindest einseitig mit einer Lotschicht ausgestattet sein. Diese Lotschicht kann bspw. durch Plattierung auf dem Kernmaterial aufgebracht werden. Es ist ebenfalls denkbar, dass das Halbzeug zumindest einseitig eine korrosionsreduzierende Zwischenschicht aufweist, die zwischen Lotschicht und Kernmaterial angeordnet ist. Eine derartig korrosionsreduzierende Zwischenschicht kann ebenfalls durch Plattierung auf das Kernmaterial aufgebracht werden.

Unter Halbfabrikat-Bauteilen versteht man Bauteile, die durch Stanzen, Prägen, Umformen oder dergleichen aus einem Halbzeug hergestellt werden. Dabei können derartige Halbfabrikat-Bauteile als Schalen oder Halbschalen ausgebildet sein, die zueinander angeordnet und miteinander verlötet einen Wärmeübertrager ausbilden. Ebenfalls von dem Begriff Halbfabrikat-Bauteilen umfasst sind Flanschplatten, Abschlussplatten, Endplatten, Grundplatten, Lamellen, Turbulenzeinsätze oder dergleichen.

Dabei versteht man unter seitig, einseitig, zweiseitig oder Seite eines Halbzeuges bzw. eines Halbfabrikat-Bauteiles die Oberseite oder Unterseite des flach ausgebildeten Halbzeuges bzw. die Oberseite und die Unterseite des Halbfabrikat-Bauteiles. Demzufolge wird bei dem Halbzeug bzw. dem Halbfabrikat-Bauteil zwischen Oberseite, Unterseite und den randseitigen Kanten, Randbereichen unterschieden.

Werden die Halbfabrikat-Bauteile zu einer Wärmeübertrager-Baugruppe zusammengesetzt, so kann eine derartig vorbereitete Wärmeübertrager-Baugruppe durch Verlöten zu einem Wärmeübertrager ausgebildet werden. Somit versteht man unter einer Wärmeübertrager-Baugruppe eine zueinander angeordnete und ggf. gegeneinander fixierte Anzahl von Halbfabrikat-Bauteilen, die so vorbereitet durch nachfolgende Verlötung einen Wärmeübertrager ergeben.

Unter einem Kernmaterial eines Halbzeuges ist die mittig angeordnete Schicht des Halbzeuges zu verstehen, die üblicherweise die größte Dicke aufweist. Unter der Lotschicht ist die an der Oberfläche angeordnete Schicht des Halbzeuges zu verstehen, die Loteigenschaften aufweist, und mittels derer die Halbfabrikat-Bauteile untereinander zu dem Wärmeübertrager verlötet werden.

Eine korrosionsreduzierende Zwischenschicht ist eine Schicht, die dem Materialverband bestehend aus Kern und ggf. Lot eine verbesserte Korrosionseigenschaft im Vergleich zu einem Kernmaterial ohne Zwischenschicht und/oder der Lotschicht verleiht. Die Korrosionsreduktion kann dadurch erreicht werden, dass die korrosionsreduzierende Zwischenschicht aufgrund der chemischen Zusammensetzung unedler ausgebildet ist, als beispielsweise das Kernmaterial. In diesem Fall ist es möglich, dass sich bei einem Korrosionsangriff die korrosionsreduzierende Zwischenschicht zugunsten des Kernmaterials opfert und insofern Ihre korrosionsreduzierende Wirkung entfaltet. Sie kann zwischen Lotschicht und Kernmaterial angeordnet sein oder auch als oberste Schicht auf dem Halbzeug zumindest einseitig angeordnet sein. Ist die korrosionsreduzierende Zwischenschicht die oberste Schicht des Halbzeuges, dann kann das Lotmaterial zum Verlöten der Halbfabrikat-Bauteile notwendigerweise von einem anderen Bauteil oder durch Lotpasten oder anderweitig appliziertes Lotmaterial bereitgestellt werden. Da die Halbfabrikat-Bauteile letztlich aus dem Halbzeug hergestellt sind, sind auch die Halbfabrikat-Bauteile analog zum Halbzeug hinsichtlich ihrer Schichtstruktur aufgebaut.

Unter einem CAB-Lötverfahren versteht man ein Lötverfahren unter Verwendung einer kontrollierten Schutzgasatmosphäre, die einen derart geringen Sauerstoffgehalt aufweist, dass eine Reoxidation der aufgebrochenen Aluminiumoberflächen während des Verlötens derart verringert ist, dass eine ausreichend gute Verlötung der Halbfabrikat-Bauteile ermöglicht wird.

Die vorstehenden oder nachfolgenden Konzentrationsangaben von Bestandteilen in % sind insbesondere als Gew.-% zu verstehen.

Dabei ist es auch denkbar, dass das Kernmaterial 0,1% bis 1,25% Magnesium, bspw. 0,1% bis 1,0% Magnesium, insbesondere 0,1% bis 0,6% Magnesium und ggf. 0,2% bis 0,4% Magnesium aufweist.

Ebenfalls denkbar ist, dass die Lotschicht maximal 0,15 % Magnesium aufweist, bspw. maximal 0,1% Magnesium aufweist, insbesondere maximal 0,08 % Magnesium aufweist und ggf. maximal 0,05 % Magnesium aufweist.

Des Weiteren ist es denkbar, dass die korrosionsreduzierende Zwischenschicht 0,2% bis 0,4% Magnesium aufweist.

Des Weiteren kann das Kernmaterial 0,0% bis 0,9% Silicium, bspw. 0,0% bis 0,8% Silicium, ggf. 0,0% bis 0,7% Silicium und bspw. 0,0 % bis 0,6 % Silicium aufweisen.

Die vorgenannten Konzentrationen an Silizium führen vorteilhaft bei der während des Lötens eintretenden Si-Diffusion aus dem Lot in das Kernmaterial zu Ausscheidungen in den Randzonen, die eine elektrochemisch schützende Schicht bilden.

Weiterhin kann das Kernmaterial 0,0 % bis 0,6 % Eisen, insbesondere 0,0 % bis 0,5 % Eisen, ggf. 0,0 % bis 0,4 % Eisen und bspw. 0,0 % bis 0,3 % Eisen aufweisen.

Eisen bildet vorteilhaft mit Mangan und/oder Silizium Ausscheidungen, die die Bildung einer elektrochemischen, insbesondere elektrochemisch schützenden, Schicht unterstützen.

Weiterhin kann das Kernmaterial 0,0 % bis 1,25 % Kupfer, 0,0 % bis 1,2 % Kupfer, insbesondere 0,0 % bis 1,0 % Kupfer und bspw. 0,0 % bis 0,7 % Kupfer aufweisen.

Kupfer erhöht vorteilhaft das elektrochemisch freie Potenzial, so dass sich ein Korrosionsangriff auf die elektrochemisch unedleren Bereiche beschränkt, wodurch eine ggf. eintretende Korrosion vom Kernmaterial weitestgehend ferngehalten werden kann.

Weiterhin kann das Kernmaterial 0,6 % bis 1,9 % Mangan, insbesondere 0,7 % bis 1,6 % Mangan, ggf. 0,8 % bis 1,5 % Mangan und bspw. 0,9 % bis 1,4 % Mangan aufweisen.

Mangan erhöht vorteilhaft die Festigkeit des jeweiligen Materials und bildet mit z.B. Silizium Ausscheidungen in den von einer eintretenden Si-Diffusion berührten Schichten, wobei die Ausscheidungen in den vorstehend benannten Schichten das elektrochemische Potenzial erniedrigen und demzufolge als oberflächliche Opferschichten wirken, so dass das Kernmaterial weitestgehend vor Korrosion geschützt werden kann.

Weiterhin kann die Lotschicht 6,5 % bis 125, % Silicium, bspw. 6,5% bis 12% Silicium, insbesondere 6,5% bis 11 % Silicium und bspw. 6,5% bis 10,5 % Silicium aufweisen.

Aluminium und Silizium bilden vorteilhaft ein Eutektikum bei 577°C, so dass sich durch die Zugabe einer vorstehend benannten Menge an Silizium zu einer Aluminiumlegierung ein Lot ausbilden lässt, dass beim Löten zumindest teilweise aufschmilzt und die Bauteile zueinander verlötet.

Weiterhin kann die Lotschicht 0,2 % bis 2,5 % Zink, insbesondere 0,3 % bis 2,5 % Zink, bspw. 0,4 % bis 2,0 % Zink und ggf. 0,5 % bis 1,0 % Zink aufweisen.

Weiterhin kann die korrosionsreduzierende Zwischenschicht 0,2 % bis 2,5 % Zink, insbesondere 0,3 % bis 2,5 % Zink, ggf. 0,4 % bis 2,0 % Zink und bspw. 0,5 % bis 1,0 % Zink aufweisen.

Zink erniedrigt vorteilhaft das elektrochemische freie Potenzial des jeweiligen Materials, so dass die aus dem Material ausgebildete Schicht als Opferschicht gegenüber edleren Bereichen, insbesondere dem Kernmaterial, dienen kann.

Weist die korrosionsreduzierende Zwischenschicht eine Dicke von 10 bis 200 µm auf, so kann vorteilhaft mit nur geringem Materialeinsatz eine deutliche Verbesserung des Korrosionsverhalten des fertigen Wärmeübertragers erreicht werden, da eine derartige Dicke einen ausreichenden Korrosionsschutz gegenüber den üblicherweise in den Fluidkanälen strömenden, aggressiven Medien darstellt.

Des Weiteren kann die korrosionsreduzierende Zwischenschicht eine Dicke von 15 bis 175 µm, insbesondere von 20 bis 150 µm, ggf. von 25 bis 100 µm und bspw. von 30 bis 75 µm aufweisen.

Weist das Halbzeug eine Materialabfolge Kernmaterial-korrosionsreduzierende Zwischenschicht-Lotschicht auf, so kann vorteilhaft zumindest einseitig ein CAB-Lötverfahren mit zumindest reduziertem Flussmitteleinsatz durchgeführt werden, wobei aufgrund der eingesetzten korrosionsreduzierenden Zwischenschicht zumindest in den Fluidkanälen mit einer derartigen korrosionsreduzierenden Zwischenschicht die Korrosionseigenschaften des Wärmeübertragers verbessert sind.

Ist die Materialabfolge Lotschicht-Kernmaterial-korrosionsreduzierende Zwischenschicht-Lotschicht, so kann beidseitig ein flussmittelarmes bzw. flussmittelfreies CAB-Lötverfahren angewendet werden, wobei zumindest einseitig aufgrund des Einsatzes der korrosionsreduzierenden Zwischenschicht eine Verbesserung der Korrosionseigenschaften des Wärmeübertragers in den zugehörigen Fluidkanälen möglich ist.

Wird nun eine Materialabfolge Lotschicht-korrosionsreduzierende Zwischenschicht-Kernmaterial-korrosionsreduzierende Zwischenschicht-Lotschicht verwendet, so kann mit einem derartigen Halbzeug vorteilhaft beidseitig ein flussmittelfreies CAB-Lötverfahren angewendet werden, wobei aufgrund des Einsatzes der korrosionsreduzierenden Zwischenschicht auf beiden Seiten die Korrosionsbeständigkeit des Wärmeübertragers in den zugehörigen Fluidkanälen verbessert werden kann.

In einem weiteren Aspekt der Erfindung wird ein zur nachfolgenden CAB-Verlötung vorbereitete Wärmeübertrager-Baugruppe aus Halbfabrikat-Bauteilen vorgeschlagen, wobei zumindest einige Halbfabrikat-Bauteile ein Kernmaterial aus einer AL3000-Legierung oder einer AL6000-Legierung aufweisen, das 0,1 % bis 1,5 % Magnesium umfasst und einseitig oder zweiseitig eine Lotschicht aus einer AL4000-Legierung aufweist, die maximal 0,2 % Magnesium umfasst.

Vorteilhaft kann bei Verwendung einer derartigen vorbereiteten Wärmeübertrager-Baugruppe eine CAB-Verlötung durchgeführt werden, da mittels des Magnesiums die auf den Oberflächen liegenden Oxidschichten aufgebrochen werden können und zumindest oberflächennah aufgrund des Gettering-Effektes die mikroskopische Schutzgasatmosphäre einen reduzierten oder gar keinen freien Sauerstoffgehalt aufweisen kann.

Dabei ist es auch denkbar, dass das Kernmaterial 0,1% bis 1,25% Magnesium, bspw. 0,1% bis 1,0% Magnesium, insbesondere 0,1% bis 0,6% Magnesium und ggf. 0,2% bis 0,4% Magnesium aufweist.

Ebenfalls denkbar ist, dass die Lotschicht maximal 0,15 % Magnesium aufweist, bspw. maximal 0,1% Magnesium aufweist, insbesondere maximal 0,08 % Magnesium aufweist und ggf. maximal 0,05 % Magnesium aufweist.

In einem weiteren Aspekt der Erfindung wird eine zur nachfolgenden CAB-Verlötung vorbereitete Wärmeübertrager-Baugruppe vorgeschlagen, wobei zumindest einige Halbfabrikat-Bauteile aus einem Halbzeug, wie zuvor beschrieben, hergestellt sind und demzufolge zumindest einseitig eine zwischen der Lotschicht und dem Kernmaterial angeordnete korrosionsreduzierende Zwischenschicht aus einer AL1000-Legierung oder einer AL7000-Legierung aufweisen, die 0,2 % bis 0,4 % Magnesium umfasst.

Vorteilhaft kann durch den Einsatz einer derartigen Wärmeübertrager-Baugruppe ein CAB-Verlötungsverfahren angewendet werden und auf den Einsatz von Flussmitteln verzichtet werden. Zudem ist aufgrund der korrosionsreduzierenden Zwischenschicht der aus der Wärmeübertrager-Baugruppe hergestellte Wärmeübertrager zumindest in vorbestimmten Fluidkanälen zumindest abschnittsweise hinsichtlich der Korrosion verbessert ausgebildet, sodass insgesamt die Korrosionseigenschaften des Wärmeübertragers verbessert sind.

Des Weiteren ist es denkbar, dass die korrosionsreduzierende Zwischenschicht 0,2% bis 0,4% Magnesium aufweist.

Des Weiteren kann die Lotschicht in einem zukünftig gasführenden Fluidkanal an dem Halbfabrikat-Bauteil angeordnet sein.

Vorteilhaft kann dadurch in dem gasführenden Fluidkanal eine CAB-Verlötung vorgenommen werden. Dies gelingt u. a., weil üblicherweise die zukünftig gasführenden Fluidkanäle bei der vorbereiteten Wärmeübertrager-Baugruppe vorgeformt sind und im Wesentlichen auch nur im geringeren Maße von der umgebenden Schutzgasatmosphäre während des Lötprozesses durchströmt werden. Demzufolge kann sich in den zukünftig gasführenden Fluidkanälen eine mikroskopische Schutzgasatmosphäre ausbilden, die im Vergleich zu einer in der Lötvorrichtung herrschenden makroskopischen Schutzgasatmosphäre einen verringerten Sauerstoffgehalt aufweisen kann. Dadurch kann im Bereich der zu verlötenden Oberflächen der freie Sauerstoffgehalt derart abgesenkt werden, dass ein flussmittelarmes bzw. flussmittelfreis CAB-Verlöten ermöglicht ist.

Des Weiteren kann eine Lotschicht in einem zukünftig flüssigkeitsführenden Fluidkanal angeordnet sein.

Da vor allem im Falle eines zukünftig flüssigkeitsführenden Fluidkanals auch eine geringe Durchströmung desselben durch die umgebende Schutzgasatmosphäre nicht zu erwarten ist, ist ein störender Austausch der Atmosphäre direkt an den zu verlötenden Kontaktflächen bzw. Oberflächen gering ausgebildet bzw. nicht vorhanden, sodass die aufgrund des Gettering-Effekts eintretende Sauerstoffreduktion durch nachströmendes Schutzgas, das unvermeidliche Restsauerstoffanteile enthält, während des Lötprozesses nicht oder nur geringfügig verschlechtert wird. So kann gerade bei zukünftig flüssigkeitsführenden Fluidkanälen auf den Einsatz von Flussmittel während des CAB-Lötverfahrens verzichtet werden.

Weiterhin kann die korrosionsreduzierende Zwischenschicht in einem zukünftig gasführenden Fluidkanal angeordnet sein. Vorteilhaft kann in diesem Fall die Korrosionsbeständigkeit im gasführenden Fluidkanal bei dem aus dem Wärmeübertrager-Baugruppe herstellten Wärmeübertrager verbessert werden.

Weiterhin kann die korrosionsreduzierende Zwischenschicht in einem zukünftig flüssigkeitsführenden Fluidkanal angeordnet sein. Vorteilhaft können dadurch ebenfalls die Korrosionseigenschaften der flüssigkeitsführenden Fluidkanäle bei dem endmontierten Wärmeübertrager verbessert werden.

Dabei versteht man unter einem zukünftig gasführenden Fluidkanal bzw. unter einem zukünftig flüssigkeitsführenden Fluidkanal die Bereiche bzw. Kanäle der Wärmeübertrager-Baugruppen, die nach Verlötung der Wärmeübertrager-Baugruppe zum Wärmeübertrager einen jeweiligen gasführenden Fluidkanal bzw. flüssigkeitsführenden Fluidkanal ausbilden.

In einem weiteren Aspekt der Erfindung wird ein Lötverfahren zur Herstellung von Wärmeübertragern aus Halbfabrikat-Bauteilen vorgeschlagen, bei dem eine Wärmeübertrager-Baugruppe nach einem der vorhergehenden Ansprüche mittels eines CAB-Lötverfahrens zu einem Wärmeübertrager verlötet wird.

Vorteilhaft kann bei dem Einsatz derartiger Halbfabrikat-Bauteile ein CAB-Lötverfahren angewendet werden, ohne dass Flussmittel zum Einsatz kommen müssen.

Des Weiteren kann die makroskopische Schutzgasatmosphäre in einer Lötapparatur einen Sauerstoffgehalt von 10 bis 500 ppm aufweisen.

Vorteilhaft kann bei einem noch relativ hohen Sauerstoffgehalt in der makroskopischen Schutzgasatmosphäre dennoch das CAB-Lötverfahren durchgeführt werden und dies mit einem reduzierten Einsatz von Flussmittel oder ohne Einsatz von Flussmittel. Demzufolge kann ein günstigeres Schutzgas eingesetzt werden und/oder auf eine teure und aufwendige Absenkung des Sauerstoffgehalts in der Schutzgasatmosphäre ggf. mittel konstruktiver Maßnahmen wie den Einsatz von zwei oder mehreren Lötapparaturen weitestgehend verzichtet werden.

Es ist auch denkbar, dass der Sauerstoffgehalt der makroskopischen Schutzgasatmosphäre einen Sauerstoffgehalt von 20 bis 500 ppm, insbesondere von 50 bis 500 ppm, ggf. von 70 bis 500 ppm und beispielsweise von 100 bis 500 ppm aufweist.

In einem weiteren Aspekt der Erfindung wird ein Wärmeübertrager, hergestellt mit einem CAB-Lötverfahren, insbesondere wie vorstehend beschrieben, unter Verwendung von Halbfabrikat-Bauteilen, insbesondere wie vorstehend beschrieben, die aus Halbzeugen, insbesondere wie vorstehend beschrieben, hergestellt sind, vorgeschlagen.

Vorteilhaft kann mittels des CAB-Verfahrens ein Wärmeübertrager, der flussmittelfrei oder zumindest flussmittelarm ausgebildet ist, hergestellt werden, ohne dass das Flussmittel aufwendig nach der Herstellung des Wärmeübertragers aus demselben entfernt werden muss. Somit entstehen bei einem derartig hergestellten Wärmeübertrager auch die nachteiligen Ausscheidungen aus dem jeweilig eingesetzten Fluid durch chemische Interaktion mit Flussmittelrückständen nicht oder nur in geringem Maße.

Des Weiteren kann der Wärmeübertrager als flüssigkeitsgekühlter Ladeluftkühler ausgebildet sein.

Vorteilhaft kann in diesem Fall zumindest im Bereich der flüssigkeitsführenden Fluidkanäle auf den Einsatz von Flussmittel verzichtet werden oder dieses nur in verringertem Maße eingesetzt werden, weil im Falle eines flüssigkeitsgekühlten Ladeluftkühlers die flüssigkeitsführenden Fluidkanäle gegenüber der umgebenden makroskopischen Schutzgasatmosphäre auch im Falle der vorbereiteten Wärmeübertrager-Baugruppe nahezu geschlossen ausgebildet sind, sodass eine mikroskopische Schutzgasatmosphäre im Bereich der flüssigkeitsgekühlten Fluidkanäle aufgrund des Gettering-Effektes des Magnesiums sauerstoffärmer ausgebildet sein kann, als die makroskopische Schutzgasatmosphäre, die in der Lötapparatur herrscht. Demzufolge kann bei flüssigkeitsgekühlten Ladeluftkühlern eine Schutzgasatmosphäre mit einem höheren Sauerstoffgehalt eingesetzt werden, ohne dass Flussmittel zum Verlöten notwendig wird, da eine Durchmischung der Schutzgasatmosphäre bzw. eine Durchströmung derselben in den zukünftig flüssigkeitsführenden Fluidkanälen aufgrund der Bauweise verschwindend gering ausgebildet ist.

Es ist aber denkbar, dass auch bei einem flüssigkeitsgekühlten Ladeluftkühler in den gasführenden Fluidkanälen auf ein Flussmittel verzichtet werden kann, da ebenfalls in diesen gasführenden Fluidkanälen schon bei der vorbereiteten Wärmeübertrager-Baugruppe ein Eindringen bzw. Durchmischen der makroskopischen Schutzgasatmosphäre in den mikroskopischen Bereich der gasführenden Fluidkanäle weitestgehend gering ausgebildet sein kann. Insofern kann auch in den gasführenden Fluidkanälen der Gettering-Effekt des Magnesiums auf die mikroskopische Schutzgasatmosphäre im Bereich der Lötstellen sauerstoffreduzierend wirken, ohne dass in wesentlichem Umfang im mikroskopischen Bereich die Reduktion des Sauerstoffgehaltes von der eindringenden, Restsauerstoff enthaltenden, makroskopischen Schutzgasatmosphäre in die gasführenden Fluidkanälen aufhoben wird.

Des Weiteren kann der Wärmeübertrager in Schalenbauweise ausgebildet sein.

Vorteilhaft können vor allem bei der Schalenbauweise Fluidkanäle ausgebildet werden, die weitestgehend geschlossen gegenüber der Umgebung ausgebildet sind und bei denen ein Austausch der mikroskopischen Schutzgasatmosphäre in den Fluidkanälen mit der makroskopischen Schutzgasatmosphäre in der Lötapparatur weitestgehend ausgeschlossen bzw. verringert ist.

Des Weiteren kann der Wärmeübertrager in Plattenbauweise ausgebildet sein.

Vorteilhaft können bei dieser Bauweise zumindest innerhalb der Platten Fluidkanäle ausgebildet werden, deren mikroskopische Schutzgasatmosphäre im Wesentlichen nicht im ständigen Austausch mit einer makroskopischen Schutzgasatmosphäre steht, sodass auch in diesem Fall der Gettering-Effekt des Magnesiums zu einer Verringerung des Sauerstoffgehaltes in der mikroskopischen Schutzgasatmosphäre bzw. im Bereich der Lötbereich führen kann.

Dabei versteht man unter einer makroskopischen Schutzgasatmosphäre die Zusammensetzung des Schutzgases in der Lötapparatur, insbesondere in dem Bereich, der zwischen den Wärmeübertragern angeordnet ist und der die Wärmeübertrager bzw. die zur Verlötung vorbereiteten Wärmeübertrager-Baugruppen umgibt. Unter einer mikroskopischen Schutzgasatmosphäre versteht man die Zusammensetzung des Schutzgases im Bereich der Fluidkanäle bzw. im Bereich der zu verlötenden Bauteile bzw. im Bereich der Lötstellen. Dabei ist bei speziellen Bauweisen die mikroskopische Schutzgasatmosphäre im Bereich der Fluidkanäle im Wesentlichen gegenüber der makroskopischen Schutzgasatmosphäre weitgehend gekapselt ausgebildet, sodass ein Austausch der mikroskopischen Schutzgasatmosphäre mit der makroskopischen Schutzgasatmosphäre im Wesentlichen nicht stattfindet oder nur in sehr geringem Umfang eintritt.

Es zeigen, jeweils schematisch:
- Fig. 1: einen Wärmeübertrager in Plattenbauweise,
- Fig. 2: einen Wärmeübertrager in Schalenbauweise,
- Fig. 3: ein auf eine Rolle aufgewickeltes Halbzeug,
- Fig. 4: einen Querschnitt durch ein Halbzeug in Einbaulage in einer zur nachfolgenden Verlötung vorbereiteten Wärmeübertrager-Baugruppe,
- Fig. 5: eine schematische Darstellung des eintretenden Gettering-Effekts bei Verwendung erfindungsgemäßer Halbzeuge.

Ein Wärmeübertrager 100 in Plattenbauweise 110 weist als vorbereitete Wärmeübertrager-Baugruppe 120 mehrere Halbschalen 130, 130' auf, die jeweils paarweise miteinander verlötet ein Plattenpaar 135 ausbilden. Zwischen diesen paarweise miteinander verbundenen Halbschalen 130, 130', also innerhalb der Plattenpaare 135 wird jeweils ein erster Fluidkanal 140 ausgebildet, in welchem im endmontierten Wärmeübertrager 100 ein erstes Fluid strömt. Dabei gelangt das erste Fluid in derartige erste Fluidkanäle 140 über Dome 150, die ebenfalls aus den Halbschalen 130, 130' durch Verlötung ausgebildet sind.

In diesen ersten Fluidkanälen 140 kann ein Einsatz 160, insbesondere ein Turbulenzeinsatz 160, eingesetzt sein.

Zwischen den aus den Halbschalen 130, 130' ausgebildeten Plattenpaaren 135 werden aufgrund der Stapelbauweise weitere zweite Fluidkanäle 170 ausgebildet, in die ebenfalls Einsätze 180, insbesondere als Lamellen ausgebildet, eingesetzt sein können. Sowohl die Einsätze 160 als auch die Einsätze 180 können im endmontierten Wärmeübertrager 100 mit den Halbschalen 130, 130' bzw. mit den Plattenpaaren 135 verlötet sein. Des Weiteren kann der Wärmeübertrager 100 eine abschließende Flanschplatte 190 bzw. eine abschließende Grundplatte 200 aufweisen.

Zudem können an der Flanschplatte 190 Anschlussstutzen 210 angeordnet sein, mittels derer das erste Fluid über die Dome 150 den ersten Fluidkanälen 140 zugeführt bzw. aus den ersten Fluidkanälen abgeführt werden kann.

Die gesamte dargestellte Wärmeübertrager-Baugruppe 120 weist demzufolge Halbfabrikat-Bauteile auf, die als Halbschalen 130, 130', Einsätze 160, Plattenpaare 135, Einsätze 160,180, Flanschplatten 190, Grundplatten 200 und Anschlussstutzen 210 ausgebildet sein können. Dabei ist auch denkbar, dass noch andere Halbfabrikat-Bauteile zum Einsatz kommen.

Ein derartig in Plattenbauweise 110 ausgebildeter Wärmeübertrager 100 kann bspw. als flüssigkeitsgekühlter Ladeluftkühler 220 eingesetzt werden, wobei das erste Fluid als Flüssigkeit, bspw. als Kühlflüssigkeit umfassend Wasser und/oder Glykol und/oder Korrosionsinhibitoren, ausgebildet sein, wobei in diesem Fall die Kühlflüssigkeit über die Anschlussstutzen 210 den ersten Flüssigkeitskanälen 140 zugeleitet bzw. aus den ersten Flüssigkeitskanälen 140 abgeleitet wird. Dabei durchströmt das als Ladeluft ausgebildete zweite Fluid, das zumindest anteilig Abgas enthalten kann, die zweiten Fluidkanäle 170. In diesem Fall liegt ein Flüssig-Gas-Wärmeübertrager vor. Es ist aber auch denkbar, dass das zweite Fluid ebenfalls flüssig ausgebildet, so dass in diesem Fall ein Flüssig-Flüssig-Wärmeübertrager vorliegt. Ebenso ist es möglich, dass alternativ entweder das erste Fluid oder das zweite Fluid als 2-Phasen-Fluid eingesetzt wird, welches in dem Wärmeübertrager zumindest teilweise vom gasförmigen Aggregatzustand in den flüssigen Aggregatzustand überführt wird. In diesem Fall ist der Wärmeübertrager als Kondensator ausgebildet.

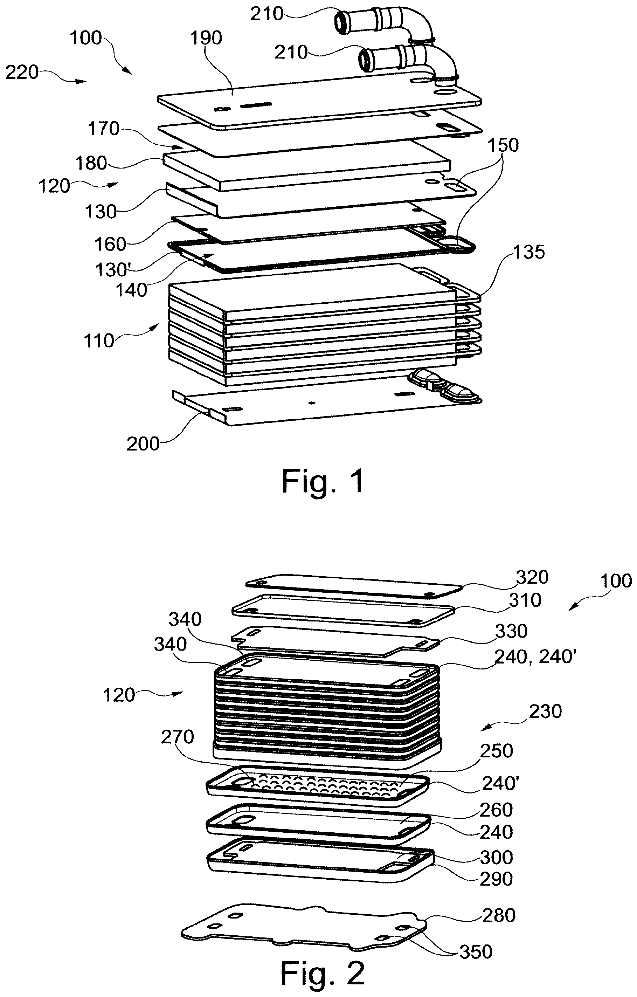

Der Wärmeübertrager 100 gemäß Fig. 2 ist in Schalenbauweise 230 ausgeführt und weist mehrere Rohrschalen 240, 240' auf. Diese Rohrschalen 240, 240' werden ineinander versteckt und bilden aufgrund der Versteckung zueinander erste Fluidkanäle 250 und zweite Fluidkanäle 260 aus. Dabei wird der erste Fluidkanal 250 von einem ersten Fluid durchströmt und der zweite Fluidkanal 260 von einem zweiten Fluid. In den ersten Fluidkanäle 250 und/oder in den zweiten Fluidkanäle 260 können Einsätze positioniert sein und/oder die Rohrschalen 240, 240' können mit dimpelförmigen Aufwölbungen 270 ausgestattet sein, die zum einen der Abstützung an die nachfolgende Rohrschale 240, 240', sowie der Erhöhung der Zugfestigkeit dienen und die zum anderen mikroskopische Fluidkanäle in den ersten Fluidkanälen 250 und den zweiten Fluidkanälen 260 ausbilden können.

Des Weiteren kann der Wärmeübertrager 100 noch mit einer endseitigen Flanschplatte 280 ausgestattet sein, die mit einer Grundrohrschale 290 verbunden wird, in die ein Einsatz 300 und eine nachfolgende normale Rohrschale 240, 240' eingesetzt sein kann. Auf der zur Flanschplatte 280 gegenüberliegenden Seite kann der Wärmeübertrager 100 durch eine Endrohrschale 310, die in die letzte Rohrschale 240, 240' eingesetzt ist und/oder durch eine Endplatte 320, die in der Endrohrschale 310 oder in der letzte Rohrschale 240, 240' angeordnet ist, abgeschlossen werden. Zwischen der Endrohrschale 310 und der letzten normalen Rohrschale 240, 240' kann ein Einsatz 330 angeordnet sein.

Dabei können die ersten Fluidkanäle 250 und die zweiten Fluidkanäle 260 über aus den Rohrschalen 240, 240' ausgebildete Dome 340 mit dem jeweiligen Fluid versorgt werden.

Ein derartiger Wärmeübertrager 100 kann als flüssigkeitsgekühlter Ölkühler 345 ausgebildet sein, wobei bspw. die ersten Fluidkanäle 250 von der Kühlflüssigkeit, Wasser und/oder Glykol und/oder Korrosionsinhibitoren aufweisend, durchströmt werden, während die zweiten Fluidkanäle 260 von dem zu kühlenden Öl durchströmt werden. Dabei können das erste Fluid und das zweite Fluid über in der Flanschplatte 280 ausgebildete Öffnungen 350 mittels der Dome 340 zu den ersten Fluidkanälen 250 bzw. zu den zweiten Fluidkanälen 260 zu- und abgeführt werden.

Im Falle des in der Fig. 2 gezeigten Wärmeübertragers 100 können Halbfabrikat-Bauteile 360 demzufolge als Rohrschalen 240, 240', Flanschplatten 280, Grundrohrschalen 290, Einsätze 300, Endrohrschalen 310, Endplatten 320, Einsätze 330 ausgebildet sein.

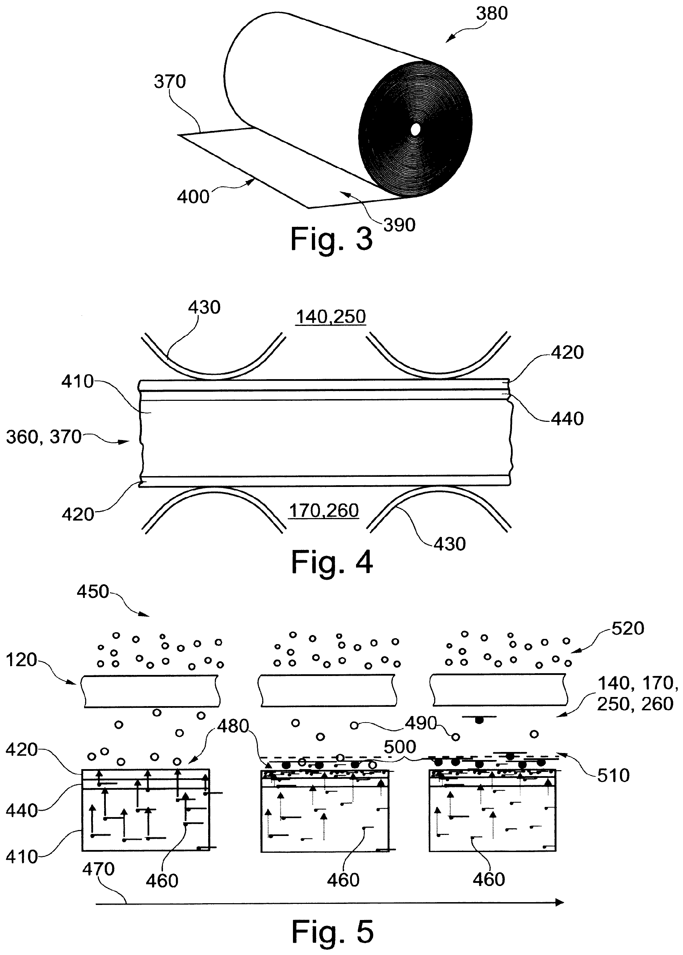

Derartige Halbfabrikat-Bauteile 360 können aus einem Halbzeug 370, wie in Fig. 3 dargestellt, hergestellt werden. Solche Halbzeuge 370 können auf einer Rolle 380 aufgewickelt im Prozess eingesetzt werden, wobei das Halbzeug 370 eine Oberseite 390 und eine Unterseite 400 aufweist. Demzufolge ist im Falle eines Halbzeuges 370 bei einer einseitigen oder zweiseitigen Ausbildung jeweils die Ausbildung an der Oberseite 390 und/oder an der Unterseite 400 zu verstehen. Im Fall der Halbfabrikat-Bauteile 360 ist mit der vorstehenden Begrifflichkeit die jeweilige ursprüngliche Oberseite 390 und/oder Unterseite 400 des Halbzeuges 370 referenziert.

Ein derartiges Halbzeug 370 bzw. eine derartiges Halbfabrikat-Bauteil 360, wie in Fig. 4 gezeigt, kann im Querschnitt und in Einbaulage in der Wärmeübertrager-Baugruppe 120 ein Kernmaterial 410 aufweisen, das üblicherweise die größte Dicke aufweist. Zumindest einseitig kann sich direkt an das Kernmaterial 410 eine Lotschicht 420 anschließen.

Mittels einer derartigen Lotschicht 420 können Strukturen 430 weiterer Halbfabrikat-Bauteile 360, wie bspw. dimpelförmige Aufwölbungen 270, Einsätze 180, die als Lamellen ausgebildet sein können oder Einsätze 160,300,330, die als Turbulenzeinsätze ausgebildet sein können, verlötet werden.

Es ist auch denkbar, dass sich beidseitig an das Kernmaterial 410 eine derartige Lotschicht 420 anschließt.

Zumindest einseitig kann anliegend an das Kernmaterial 410 eine korrosionsreduzierende Zwischenschicht 440 angeordnet sein, an die sich wiederum eine Lotschicht 420 anschließen kann. In diesem Fall wird ebenfalls mit der Lotschicht 420 eine Verlötung der Strukturen 430 anderer Halbfabrikat-Bauteile 360 erreicht, wobei nach der Verlötung die korrosionsreduzierende Zwischenschicht 440 zu einer Verbesserung der Korrosionsbeständigkeit des Wärmeübertragers zumindest in dem anliegenden Fluidkanal 140,170,250,260 führt.

Im Falle der Plattenbauweise 110, wie in Fig. 1 gezeigt, ist es denkbar, dass lediglich im zweiten Fluidkanal 170 eine korrosionsreduzierende Zwischenschicht 440 vorgesehen ist, während im ersten Fluidkanal 140 lediglich die Lotschicht 420 in der Wärmeübertrager-Baugruppe 120 aufzufinden ist. Demzufolge wird lediglich im gasführenden Fluidkanal und somit im zweiten Fluidkanal 170 eine korrosionsreduzierende Zwischenschicht 440 eingesetzt. Es ist aber auch denkbar, dass in beiden Fluidkanälen 140, 170 eine korrosionsreduzierende Zwischenschicht 440 vorgesehen ist.

Im Falle der Schalenbauweise 230, wie in Fig. 2 gezeigt, kann im ersten Fluidkanal 250 und/oder im zweiten Fluidkanal 260 oder in keinem der Fluidkanäle 250, 260 eine korrosionsreduzierende Zwischenschicht 440 vorgesehen sein.

Bei einem CAB-Lötverfahren 450, wie in Fig. 5 gezeigt, diffundiert das in dem Kernmaterial 410 enthaltene Magnesium 460 mit zunehmender Aufheizung 470 aus der Mitte des Kernmaterials 410 zur Oberfläche 480 und reichert sich dort an, wobei es zum einen die oberflächliche Oxidschicht aufbricht und zum anderen zumindest teilweise in die Gasphase übergeht. Die in den Fluidkanälen 140, 170, 250, 260 enthaltenen Sauerstoffmoleküle 490 können dann oberflächennah mit dem Magnesium 460 zum Magnesiumoxid 500 reagieren und so den freien Restsauerstoffgehalt im mikroskopischen Schutzatmosphärenbereich 510 zumindest dicht über der Oberfläche 480 und ggf. im darin anschließenden mikroskopischen Schutzatmosphärenbereich 510 verringern. Dadurch, dass die Fluidkanäle 140, 170, 250, 260 im Wesentlichen von der die Wärmeübertrager-Baugruppe 120 umgebenden makroskopische Schutzgasatmosphäre 520 fluidisch getrennt sind, gelingt es, zumindest innerhalb der mikroskopischer Schutzgasatmosphäre 510 dauerhaft während des Lötprozesses den freien Restsauerstoffgehalt abzusenken, ohne dass die Sauerstoffreduktion durch aus der makroskopischen Schutzatmosphäre 520 eindringenden Sauerstoff wieder verschlechtert wird. Demzufolge und insbesondere bei einer Plattenbauweise 110 bzw. einer Schalenbauweise 230 gelingt eine Verlötung einer Wärmeübertrager-Baugruppe ohne Verwendung von Flussmitteln mittels eines CAB-Lötverfahrens 450.

## Patentansprüche

1. Halbzeug für Halbfabrikat-Bauteile (360) zur Herstellung eines Wärmeübertragers (100), insbesondere nach einem CAB-Lötverfahren (450), aus einem Kernmaterial (410) und zumindest einseitig mit einer Lotschicht (420) und einer zwischen Lotschicht (420) und Kernmaterial (410) angeordneten korrosionsreduzierenden Zwischenschicht (440),
wobei das Kernmaterial (410) aus einer AI3000-Legierung oder einer Al6000-Legierung besteht, die 0,1% bis 1,5% Mg aufweist,
wobei die Lotschicht (420) aus einer AI4000-Legierung besteht, die maximal 0,2% Mg aufweist,
wobei die korrosionsreduzierende Zwischenschicht (440) aus einer Al1000-Legierung oder einer AI7000-Legierung besteht, die 0,2% bis 0,4% Mg aufweist.

2. Halbzeug nach einem der vorhergehenden Ansprüche,
wobei das Kernmaterial (410) zumindest eine Konzentration eines Elementes ausgewählt aus folgender Gruppe aufweist:
0,0% bis 1,0% Si, 0,0% bis 0,7% Fe, 0,0% bis 1,5% Cu, 0,5% - 2,0% Mn.

3. Halbzeug nach einem der vorhergehenden Ansprüche,
wobei die Lotschicht (420) zumindest eine Konzentration eines Elementes ausgewählt aus folgender Gruppe aufweist:
6,5% bis 13% Si, 0,2% bis 5% Zn.

4. Halbzeug nach einem der vorhergehenden Ansprüche,
wobei die korrosionsreduzierende Zwischenschicht (440) zumindest eine Konzentration eines Elementes ausgewählt aus folgender Gruppe aufweist:
0,2% bis 5% Zn.

5. Halbzeug nach einem der vorhergehenden Ansprüche,
wobei die korrosionsreduzierende Zwischenschicht (440) eine Dicke von 10-200 µm aufweist.

6. Halbzeug nach einem der vorhergehenden Ansprüche,
wobei das Halbzeug (370) zumindest eine Materialabfolge ausgewählt aus folgender Gruppe aufweist:
Kernmaterial (410)-korrosionsreduzierende Zwischenschicht (440)-Lotschicht (420), Lotschicht (420)-Kernmaterial (410)- korrosionsreduzierende Zwischenschicht (440)-Lotschicht (420), Lotschicht (420)- korrosionsreduzierende Zwischenschicht (440)-Kernmaterial (410)- korrosionsreduzierende Zwischenschicht (440)-Lotschicht (420).

7. Zur nachfolgenden CAB-Verlötung vorbereitete Wärmeübertrager-Baugruppe (120) aus Halbfabrikat-Bauteilen (360), wobei zumindest einige Halbfabrikat-Bauteile (360) ein Kernmaterial (410) aus einer Al3000-Legierung oder einer AI6000-Legierung aufweisen, die 0,1% bis 1,5% Mg umfasst und einseitig oder zweiseitig eine Lotschicht (420) aus einer AL4000-Legierung aufweist, die max. 0,2% Mg umfasst,
wobei zumindest einige Halbfabrikat-Bauteile (360) aus einem Halbzeug (370) gemäß einem der vorhergehenden Ansprüche hergestellt sind und demzufolge zumindest einseitig eine zwischen der Lotschicht (420) und dem Kernmaterial (410) angeordnete korrosionsreduzierende Zwischenschicht (440) aus einer AI1000-Legierung oder Al7000-Legierung aufweisen, die 0,2% bis 0,4% Mg umfasst.

8. Wärmeübertrager-Baugruppe nach einem der vorhergehenden Ansprüche aus Halbfabrikat-Bauteilen (360), wobei zumindest einige Halbfabrikat-Bauteile (360) ein Kernmaterial (410) aus einer AI3000-Legierung oder einer AI6000-Legierung aufweisen, die zumindest ein Element in angegebener Konzentration ausgewählt aus folgender Gruppe umfassen: 0,0% bis 1,0% Si, 0,0% bis 0,7% Fe, 0,0% bis 1,5% Cu, 0,5% - 2,0% Mn umfasst und einseitig oder zweiseitig eine Lotschicht (420) aus einer AL4000-Legierung aufweist, die 6,5% bis 13% Si umfasst.

9. Wärmeübertrager-Baugruppe nach einem der vorhergehenden Ansprüche,
wobei zumindest eine der Schichten (420,440) eine Anordnung ausgewählt aus folgender Gruppe aufweist:
eine Anordnung der Lotschicht (420) in einem zukünftig gasführenden Fluidkanal, eine Anordnung der Lotschicht (420) in einem zukünftig flüssigkeitsführenden Fluidkanal, eine Anordnung der korrosionsreduzierenden Zwischenschicht (440) in einem zukünftig gasführenden Fluidkanal, eine Anordnung der korrosionsreduzierenden Zwischenschicht (440) in einem zukünftig flüssigkeitsführenden Fluidkanal.

10. Lötverfahren zur Herstellung von Wärmeübertragern (100) aus Halbfabrikat-Bauteilen (360), wobei eine Wärmeübertrager-Baugruppe (120) nach einem der vorhergehenden Ansprüche mittels eines CAB-Lötverfahrens (450) zu einem Wärmeübertrager (100) verlötet wird.

11. Lötverfahren nach einem der vorhergehenden Ansprüche,
wobei die makroskopische Schutzgasatmosphäre (520) in einer Lötvorrichtung einen Sauerstoffgehalt von max. 10-500 ppm aufweist.

12. Wärmeübertrager, hergestellt mit einem CAB-Lötverfahren (450), insbesondere nach einem der vorhergehenden Ansprüche, unter Verwendung von Halbfabrikat-Bauteilen (360), insbesondere nach einem der vorhergehenden Ansprüche, die aus Halbzeug (370), insbesondere nach einem der vorhergehenden Ansprüche, hergestellt sind.

13. Wärmeübertrager nach einem der vorhergehenden Ansprüche,
wobei der Wärmeübertrager (100) zumindest eine Ausbildung ausgewählt aus folgender Gruppe aufweist:
eine Ausbildung als flüssigkeitsgekühlter Ladeluftkühler (220), eine Ausbildung als flüssigkeitsgekühlter Ölkühler (), eine Ausbildung in Schalenbauweise (230), eine Ausbildung in Plattenbauweise (110).

## Claims

1. A semi-finished product for semi-finished components (360) for manufacturing a heat exchanger (100), in particular according to a CAB soldering process (450), from a core material (410) and at least on one side with a solder layer (420) and a corrosion-reducing intermediate layer (440), disposed between the solder layer (420) and the core material (410),
wherein the core material (410) consists of an Al3000 alloy or an Al6000 alloy, which has 0.1% to 1.5% Mg,
wherein the solder layer (420) consists of an Al4000 alloy, which has a maximum of 0.2% Mg,
wherein the corrosion-reducing intermediate layer (440) consists of an Al1000 alloy or an Al7000 alloy, which has 0.1% to 1.5% Mg.

2. The semi-finished product according to any one of the preceding claims,
wherein the core material (410) has at least a concentration of an element, selected from the following group:
0.0% to 1.0% Si, 0.0% to 0.7% Fe, 0.0% to 1.5% Cu, 0.5% - 2.0% Mn.

3. The semi-finished product according to any one of the preceding claims,
wherein the solder layer (420) has at least a concentration of an element, selected from the following group:
6.5% to 13% Si, 0.2% to 5% Zn.

4. The semi-finished product according to any one of the preceding claims,
wherein the corrosion-reducing intermediate layer (440) has at least a concentration of an element, selected from the following group:
0.2% to 5% Zn.

5. The semi-finished product according to any one of the preceding claims,
wherein the corrosion-reducing intermediate layer (440) has a thickness of 10-200 µm.

6. The semi-finished product according to any one of the preceding claims,
wherein the semi-finished product (370) has at least a material sequence, selected from the following group:
core material (410)-corrosion-reducing intermediate layer (440)-solder layer (420), solder layer (420)-core material (410)-corrosion-reducing intermediate layer (440)-solder layer (420), solder layer (420)-corrosion-reducing intermediate layer (440)-core material (410)-corrosion-reducing intermediate layer (440)-solder layer (420).

7. A heat exchanger assembly (120), prepared for subsequent CAB soldering, from semi-finished components (360), wherein at least some semi-finished components (360) have a core material (410) from an Al3000 alloy or an Al6000 alloy, which comprises 0.1% to 1.5% Mg and has, on one or both sides, a solder layer (420) from an AL4000 alloy, which comprises max. 0.2% Mg,
wherein at least some semi-finished components (360) are manufactured from a semi-finished product (370) according to any one of the preceding claims and consequently have, at least on one side, a corrosion-reducing intermediate layer (440) from an Al1000 alloy or Al7000 alloy, which comprises 0.2% to 0.4% Mg, arranged between the solder layer (420) and the core material (410).

8. The heat exchanger assembly according to any one of the preceding claims from semi-finished components (360), wherein at least some semi-finished components (360) have a core material (410) from an Al3000 alloy or an Al6000 alloy, which comprise at least an element in a specified concentration, selected from the following group: 0.0% to 1.0% Si, 0.0% to 0.7% Fe, 0.0% to 1.5% Cu, 0.5% - 2.0% Mn and has, on one or both sides, a solder layer (420) from an AL4000 alloy, which comprises 6.5% to 13% Si.

9. The heat exchanger assembly according to any one of the preceding claims,
wherein at least one of the layers (420,440) has an arrangement, selected from the following group:
an arrangement of the solder layer (420) in a future gas-carrying fluid channel, an arrangement of the solder layer (420) in a future liquid-carrying fluid channel, an arrangement of the corrosion-reducing intermediate layer (440) in a future gas-carrying fluid channel, an arrangement of the corrosion-reducing intermediate layer (440) in a future liquid-carrying fluid channel.

10. A soldering method for manufacturing heat exchangers (100) from semi-finished components (360), wherein a heat exchanger assembly (120) according to any one of the preceding claims is soldered to a heat exchanger (100) by means of a CAB soldering method (450).

11. The soldering method according to any one of the preceding claims,
wherein the macroscopic protective gas atmosphere (520) in a soldering device has an oxygen content of max. 10-500 ppm.

12. A heat exchanger, manufactured with a CAB soldering process (450), in particular according to any one of the preceding claims, using semi-finished components (360), in particular according to any one of the preceding claims, which are manufactured from semi-finished product (370), in particular according to any one of the preceding claims.

13. The heat exchanger according to any one of the preceding claims,
wherein the heat exchanger (100) has at least a configuration, selected from the following group:
a configuration as a liquid-cooled intercooler (220), a configuration as a liquid-cooled oil cooler (), a configuration as shell structure (230), a configuration as panel structure (110).

## Revendications

1. Produit semi-fini pour des composants semi-finis (360) pour la fabrication d'un échangeur de chaleur (100), en particulier selon un procédé de brasage CAB (450), à partir d'un matériau central (410) et comportant, au moins d'un côté, une couche de brasage (440) et une couche intermédiaire réduisant la corrosion (440), disposée entre la couche de brasage (420) et le matériau central (410),
dans lequel le matériau central (410) est constitué d'un alliage Al3000 ou d'un alliage Al6000 qui comporte 0,1 % à 1,5 % de Mg,
dans lequel la couche de brasage (420) est constituée d'un alliage Al4000 qui comporte au maximum 0,2 % de Mg,
dans lequel la couche intermédiaire réduisant la corrosion (440) est constituée d'un alliage Al1000 ou d'un alliage Al7000 qui comporte 0,2 % à 0,4 % de Mg.

2. Produit semi-fini selon l'une des revendications précédentes,
dans lequel le matériau central (410) présente au moins une concentration d'un élément choisi parmi le groupe suivant :
0,0 % à 1,0 % de Si, 0,0 % à 0,7 % de Fe, 0,0 % à 1,5 % de Cu, 0,5 % à 2,0 % de Mn.

3. Produit semi-fini selon l'une des revendications précédentes,
dans lequel la couche de brasage (420) présente au moins une concentration d'un élément choisi parmi le groupe suivant :
6,5 % à 13 % de Si, 0,2 % à 5 % de Zn.

4. Produit semi-fini selon l'une des revendications précédentes,
dans lequel la couche intermédiaire réduisant la corrosion (440) présente au moins une concentration d'un élément choisi parmi le groupe suivant :
0,2 % à 5 % de Zn.

5. Produit semi-fini selon l'une des revendications précédentes,
dans lequel la couche intermédiaire réduisant la corrosion (440) a une épaisseur de 10 à 200 µm.

6. Produit semi-fini selon l'une des revendications précédentes,
dans lequel le produit semi-fini (370) comporte au moins une séquence de matériaux choisie parmi le groupe suivant :
matériau central (410) - couche intermédiaire réduisant la corrosion (440) - couche de brasage (420), couche de brasage (420) - matériau central (410) - couche intermédiaire réduisant la corrosion (440) - couche de brasage (420), couche intermédiaire réduisant la corrosion (440) - matériau central (410) - couche intermédiaire réduisant la corrosion (440) - couche de brasage (420).

7. Ensemble d'échangeur de chaleur (120) constitué de composants semi-finis (360) préparés en vue d'un brasage CAB ultérieur, dans lequel au moins certains composants semi-finis (360) comportent un matériau central (410) constitué d'un alliage Al3000 ou d'un alliage Al6000 qui comprend 0,1 % à 1,5 % de Mg et qui comporte d'un côté ou des deux côtés une couche de brasage (420) constituée d'un alliage Al4000 qui comprend au maximum 0,2 % de Mg
dans lequel au moins certains composants semi-finis (360) sont fabriqués à partir d'un produit semi-fini (370) selon l'une des revendications précédentes et qui comporte donc au moins d'un côté une couche intermédiaire réduisant la corrosion (440) constituée d'un alliage Al1000 ou d'un alliage Al7000, disposée entre la couche de brasage (420) et le matériau central (410), qui comprend 0,2 % à 0,4 % de Mg.

8. Ensemble d'échangeur de chaleur selon l'une des revendications précédentes, constitué de composants semi-finis (360), dans lequel au moins certains composants semi-finis (360) comportent un matériau central (410) constitué d'un alliage Al3000 ou d'un alliage Al6000, qui comprennent au moins un élément choisi dans une concentration spécifiée parmi le groupe suivant : 0,0 % à 1,0 % de Si, 0,0 % à 0,7 % de Fe, 0,0 % à 1,5 % de Cu, 0,5 % à 2,0 % de Mn et qui comporte d'un côté ou des deux côtés une couche de brasage (420) constituée d'un alliage Al4000 qui comprend 6,5 % à 13 % de Si.

9. Ensemble d'échangeur de chaleur selon l'une des revendications précédentes,
dans lequel au moins une des couches (420, 440) comporte un agencement choisi parmi le groupe suivant :
un agencement de la couche de brasage (420) dans un canal de fluide destiné à transporter du gaz par la suite, un agencement de la couche de brasage (420) dans un canal de fluide destiné à transporter du liquide par la suite, un agencement de la couche intermédiaire réduisant la corrosion (440) dans un canal de fluide destiné à transporter du gaz par la suite, un agencement de la couche intermédiaire réduisant la corrosion (440) dans un canal de fluide destiné à transporter du fluide par la suite.

10. Procédé de brasage pour la fabrication d'échangeurs de chaleur (100) à partir de composants semi-finis (360), dans lequel un ensemble d'échangeur de chaleur (120) selon l'une des revendications précédentes est brasé à un échangeur de chaleur (100) au moyen d'un procédé de brasage CAB (450).

11. Procédé de brasage selon l'une des revendications précédentes,
dans lequel l'atmosphère de gaz protecteur macroscopique (520) dans un dispositif de brasage a une teneur en oxygène de 10 à 500 ppm maximum.

12. Échangeur de chaleur, fabriqué par un procédé de brasage CAB (450), en particulier selon l'une des revendications précédentes, en utilisant des composants semi-finis (360), en particulier selon l'une des revendications précédentes, qui sont fabriqués à partir d'un produit semi-produit (370), en particulier selon l'une des revendications précédentes.

13. Échangeur de chaleur selon l'une des revendications précédentes,
dans lequel l'échangeur de chaleur (100) a au moins un mode de réalisation choisi parmi le groupe suivant :
un mode de réalisation sous forme de refroidisseur d'air de charge (220) refroidi par du liquide, un mode de réalisation sous forme de refroidisseur d'huile refroidi par du liquide, un mode de réalisation sous forme de construction en coquille (230), un mode de réalisation sous forme de construction en plaque (110).
